(19) Europäisches Patentamt
European Patent Office
Office européen des brevets

(11) EP 4 751 791 A1

(12) EUROPEAN PATENT APPLICATION

(43) Date of publication:
03.06.2026 Bulletin 2026/23

(51) International Patent Classification (IPC):
B01D 19/00 (2006.01)    G21C 3/54 (2006.01)

(21) Application number: 24216513.2

(52) Cooperative Patent Classification (CPC):
B01D 19/0052; B01D 19/0042; G21C 3/54

(22) Date of filing: 29.11.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Thorizon Holding B.V.
1012 SN Amsterdam (NL)

(72) Inventors:
• DE GROOT, Sander
1012 SN Amsterdam (NL)

• KAAKS, Bouke Johannes
1012 SN Amsterdam (NL)
• BRUINSMA, Bram Jeroen
1012 SN Amsterdam (NL)
• SCHILDER, Willem Mathijs
1012 SN Amsterdam (NL)
• SCHOEMAKERS, Christiaan Wijnand
1012 SN Amsterdam (NL)

(74) Representative: EP&C
P.O. Box 3241
2280 GE Rijswijk (NL)

Remarks:
Claims 22 to 31 are deemed to be abandoned due to
non-payment of the claims fees (Rule 45(3) EPC).

(54) SYSTEM AND METHOD FOR GAS FLUID SEPARATION

(57) The invention relates to a system for gas-liquid separation, the system comprising: an enclosure for holding a fluid; a separation wall arranged in the enclosure, separating an upper end of the enclosure from a lower end; at least one first conduit for upward flow of the fluid towards a corresponding first opening of the separation wall; at least one second conduit for flow of the liquid downward from a corresponding second opening of the separation wall; a system for circulating the fluid downward via the at least one second conduit and upward via the at least one first conduit, and a gas capture section between the at least one first conduit, the at least one second conduit, and below the separation wall.

Fig. 1D

EP 4 751 791 A1

**Description**

FIELD OF THE INVENTION

The present invention relates to a system and method for gas fluid separation. The system and method may be applicable to, for instance, a molten salt based nuclear reactor.

BACKGROUND OF THE INVENTION

Molten salt reactors in which the molten salt primary coolant is also the fuel, offer great perspective in closing nuclear fuel cycles in an practically feasible, economic and safe way:

- Molten salt is highly flexible, and unlike solid nuclear fuel assemblies does not suffer from irradiation damage, is conveniently produced with easy quality assurance and quality control and without a powder step. It is therefore ideally suited to be combined with (repetitive) reprocessing and fuel (re-)manufacturing, a prerequisite for closing nuclear fuel cycles: maximizing energy extraction from nuclear material resources, while minimizing or even reducing long-lived nuclear waste streams.
- Molten salt reactors can be designed to operate at low pressure under all circumstances, assisting very low probability of containment and barrier failure, while offering strong passive safety features, such as strong negative temperature feedback (increasing temperature leads to lower reactivity) and the opportunity to relocate the coolant-fuel passively to ensure a subcritical configuration, hereby shutting down the reactor safely without any operator action required.

In these systems, the coolant-fuel is a mixture of different salts, including fissile and fertile actinide salts. The salt is circulated from a critical section where the fission reaction takes place to a section where the heat is transferred to another circuit.

Composition stability of the salt is important for stable operation of these kinds of reactors. This also applies to the coolant-fuel density and the void (i.e. gas) fraction within the reactor core. An increase in the void fraction within the active core leads to a lower fissile content, as well as a lower neutron absorption of the salt. In general, this leads to a reduction in criticality/reactivity of the reactor core, for a well-designed system. However, if the void fraction is higher or lower than anticipated, this can introduce significant uncertainties in the reactor core reactivity, which need to be compensated by reactivity correction methods, for example by reactivity control systems like control rods, and/or a change of operational parameters. This especially applies to fluctuating void fractions during operation. If these fluctuations are continuous and rapid enough, this will impose significant constraints on the reactivity control systems which will be difficult to meet in practice. This can also lead to reactivity or power oscillations that can have degrading impact on the reactor structural integrity, for example by fatigue.

Gas can be introduced during:

- initial start-up, where gas is entrained by the molten salt introduced in the system, displacing the gas that originally filled the reactor internals.
- operation, in case the flowing salt is in contact with gas volumes and pockets somewhere in the system, and gas entrains via the salt-gas surface.
- operation, by fission gas or other volatile compounds being continuously generated in the salt, that do not dissolve well in the salt, but continue to be taken with the salt flow in the form of small bubbles, which are transported along with the flow resulting in local void fractions.

As indicated the presence of gas in the liquid fuel-coolant can therefore induce continuous local reactivity fluctuations within the reactor core. In addition, some volatile compounds that are generated (like xenon and krypton) may act as neutron absorbers, enhancing reactivity fluctuations.

Even if introduction of gas during startup and entrainment of cover gas during operation is avoided , gas will still be introduced inevitably through the nuclear fission reaction. Gas entrainment and release can be quite unpredictable, as these two phase flow processes can be complex and unstable.

Therefore, a continuous gas removal system that minimizes and stabilizes the gas fraction in a fuel-bearing molten salt system is necessary for minimizing the reactivity uncertainties and potential reactivity fluctuations, and as such for a safe and reliable operation of the reactor.

In currently proposed molten salt reactor designs this is done by introducing an online primary (i.e. coolant-fuel) salt cleaning system (for example through helium bubbling), that will continuously remove the small fission bubbles from the salt through absorption within the larger helium gas bubbles . However, this brings new nuclear safety challenges due to additional connections and piping connected to the primary containment structure, thereby expanding the size and number of locations where radioactive material is present in the plant, where specifically the volatile elements and compounds form the largest release risks. It is also an active system, that needs to be kept operational. To maintain the fuel-coolant liquid as free as possible from volatile elements and compounds that are introduced during start-up and generated during operation, is a challenge for keeping the system stable and to avoid reactivity fluctuations.

In general, nuclear fuel bearing liquid reactor systems can profit from the fact that the fuel is liquid, and passive safety can be introduced by passive draining of the critical core of the reactor. Also this is a two phase flow phenomenon, where the nuclear fuel bearing liquid in the critical zone is replaced by gas, rendering the system non-critical. To restart the plant, the gas then needs to be replaced again with the fuel liquid.

In the case the nuclear fuel liquid is molten salt based, many of these reactor concepts adopt a so-called freeze valve located below the reactor core, which is a piping section between the reactor molten salt circuit and a drain or dump tank. During normal operation, the piping wall is actively cooled below the melting point of the coolant-fuel salt, causing a solid plug of frozen salt to form, which blocks the flow from the reactor circuit to the drain or dump tank. If for whatever reason the solid plug melts (for example due to a station blackout resulting in a loss of active cooling or overheating of the primary salt during a power excursion), the salt is passively drained by gravity from the reactor system to the drain or dump tank, making the reactor subcritical, while the dump and drain tank provide a non-critical configuration and proper (passive) long term cooling.

However, the functionality of a freeze valve under all imaginable circumstances is difficult to guarantee. Freezing and melting are time dependent processes, influenced by many different design features and environmental factors. This raises questions on how quick the melting will take place and how fast the draining actually will be, and whether it will be sufficient to meet the requirements of a passive reactor shutdown system. In addition, the freeze-valve needs to be continuously actively cooled during normal operation, requiring an additional, dedicated cooling system.

Design innovations are currently being explored to eliminate the need for both an active cooling system (for instance through the addition of cooling fins to the outside of the freeze-valve pipe wall) and/or the need for an active heating system (for instance through the addition of thermal masses to the freeze valve pipe which are actively heated during normal operation, however this also has the drawback of increasing the complexity of the overall freeze valve system and therefore the chance of failure). See for instance B. J. Kaaks, "Melting and Solidification Phenomena in a Molten Salt Fast Reactor," Delft University of Technology, 2024.

It should be noted that in the original Molten Salt Reactor Experiment (up to date the only operational Molten Salt Reactor), sufficiently fast melting of the freeze valve was ensured through an active heating system, which does not comply with the passive safety requirement of Generation IV nuclear reactor systems. See for instance M. Richardson, "Development of Freeze Valve for Use in the MSRE," 1962.

In addition to the melting of the freeze-valve and the subsequent passive draining of the salt, the entry of gas from the draining tank back into the reactor core upon re-start thereof also needs to be managed.

In view of the above, there is a need for an improved system and method to separate and control the amount of gas in a system comprising both liquid and gas.

SUMMARY OF THE INVENTION

Aspects of the present invention are set out in the accompanying claims.

The disclosure provides a system for gas-liquid separation, the system comprising:

an enclosure for holding a fluid;
a separation wall arranged in the enclosure, separating an upper end of the enclosure from a lower end;
at least one first conduit for upward flow of the fluid towards a corresponding first opening of the separation wall;
at least one second conduit for flow of the liquid downward from a corresponding second opening of the separation wall;
a system for circulating the fluid downward via the at least one second conduit and upward via the at least one first conduit, and
a gas capture section between the at least one first conduit, the at least one second conduit, and below the separation wall.

In an embodiment, the system comprises a flow deceleration section arranged at or near a lower end of the at least one second conduit.

In an embodiment, the flow deceleration section comprises one or more of: a widening section of a lower end of the at least one conduit, a tapering section of the at least one second conduit, a trumpet shaped section of the at least one second conduit, a plate for partially blocking fluid flow, a curved surface, a radial flow guide, and side openings in a lower end of a wall of the at least one second conduit.

In an embodiment, the at least one second conduit has a length exceeding a threshold to enable the at least one second conduit to extend into the fluid during cycling of the liquid.

In an embodiment, the system comprises a tubular wall extending downward from the separation wall, wherein the at least one first conduit is comprised of an annular space between the tubular wall and the enclosure.

In an embodiment, the tube has a lower end provided with a narrowing section having an opening, the system for cycling the liquid comprising a rotor which is arranged in the opening.

In an embodiment, the separation wall is provided with at least one third opening. The at least one third opening may have a third cross sectional area which is smaller than a first cross sectional area of the at least one first opening and/or a second cross sectional area of the at least one second opening.

In an embodiment, the at least one third opening has a third cross sectional area which is on the order of 0.5 to 10% of a second cross sectional area of the at least one second opening.

In an embodiment, the at least one third opening is provided with a tube extending upward from the separation wall. The tube may extend substantially to an upper end of the enclosure.

In an embodiment, the at least one third opening is provided with a valve.

In an embodiment, a first cross sectional area of the at least one first conduit exceeds a second cross sectional area of the at least one second conduit.

In an embodiment, the at least one second conduit is provided with a flow restriction.

According to another aspect, the disclosure provides a nuclear reactor, comprising at least one system as described above.

In an embodiment, the reactor comprises a number of individually replaceable modules, each module comprising a system as described above.

In an embodiment, the reactor comprises a single enclosure, wherein the separation wall in the enclosure is provided with one or more first conduits, and with one or more second conduits.

In an embodiment, the reactor comprises multiple systems for circulating the fluid downward via the at least one second conduit and upward via the at least one first conduit.

In an embodiment, the fluid is a liquid nuclear fuel, for instance comprising molten salt or water with uranium nitrate.

In an embodiment, the system is adapted to remove gas from the fluid and into the gas capture section upon activation of the circulation system, and
wherein one or more third openings in the separation wall provide a passive safety system when the circulation system stops, allowing gas to re-enter a top section of the enclosure, thereby making the nuclear reactor non-critical.

According to yet another aspect, the disclosure provides a method for gas liquid separation, the method comprising the steps of:

>  providing an enclosure for holding a fluid;
>  arranging a separation wall in the enclosure, separating an upper end of the enclosure from a lower end;
>  providing at least one first conduit for upward flow of the fluid towards a corresponding first opening of the separation wall;
>  providing at least one second conduit for flow of the liquid downward from a corresponding second opening of the separation wall; and
>  circulating the fluid downward via the at least one second conduit and upward via the at least one first conduit, thereby capturing gas included in the fluid in a gas capture section between the at least one first conduit, the at least one second conduit, and below the separation wall.

In an embodiment, the method comprises the step of decelerating downward flow of the fluid at or near a lower end of the at least one second conduit.

In an embodiment, the step of decelerating downward flow of the fluid comprises one or more of:

>  guiding the flow through a tapering section of the at least one second conduit or through a trumpet shaped section of the at least one second conduit,
>  at least partially blocking the flow using one or more of a plate, a curved surface, or a radial flow guide, or
>  allowing gas to escape from the fluid using side openings in a lower end of a wall of the at least one second conduit.

In an embodiment, the step of circulating the liquid comprises:
allowing gas entrained in the fluid to rise up to the separation wall, thereby collecting the gas.

In an embodiment, the at least one second conduit has a length exceeding a threshold for a volume of collected gas.

In an embodiment, the method comprises the step of allowing the gas as collected below the separation wall to escape via at least one third opening in the separation wall.

In an embodiment, the at least one third opening has a third cross sectional area which is smaller than a first cross sectional area of the at least one first opening and/or a second cross sectional area of the at least one second opening.

In an embodiment, the at least one third opening is provided with a tube extending upward from the separation wall.

In an embodiment, the method comprises the step of restricting fluid flow in the at least one second conduit, to allow the step of circulating the fluid to increase a pressure of the fluid above the at least one second conduit.

In an embodiment, the step of restricting fluid flow comprises providing a first cross sectional area of the at least one first conduit which exceeds a second cross sectional area of the at least one second conduit.

In an embodiment, the step of restricting fluid flow in the at least one second conduit comprises providing a flow restrictor in the at least one second conduit..

BRIEF DESCRIPTION OF THE DRAWINGS

Reference will be made to the figures on the accompanying drawings. The figures are schematic in nature and may not necessarily be drawn to scale. Similar reference numerals denote similar parts. On the attached drawing sheets:

Figure 1A shows a side view in cross section of an embodiment of a system of the disclosure;
Figures 1B to 1F show steps in a method of operating the embodiment of Fig. 1A;
Figure 2 shows a diagram exemplifying test results of respective embodiments, the diagram indicating gas fraction in an upper end of the system (vertical axis) versus time after start of operation (horizontal axis);
Figures 3A to 3T show side views in cross section of embodiments of a system of the disclosure;
Figures 4A to 4D show cross sectional side views of embodiments of a system of the disclosure applied in a nuclear reactor; and
Figure 5 shows a cross sectional side view of an embodiment of a nuclear reactor including at least one system of the disclosure.

DETAILED DESCRIPTION

The invention will be further elucidated in exemplary embodiments thereof as described below.

The present disclosure provides a gas-fluid separation system and method. The system and method as disclosed herein are suitable for application in molten salt reactors (MSRs), and can ensure both fission gas removal and enabling passive draining.

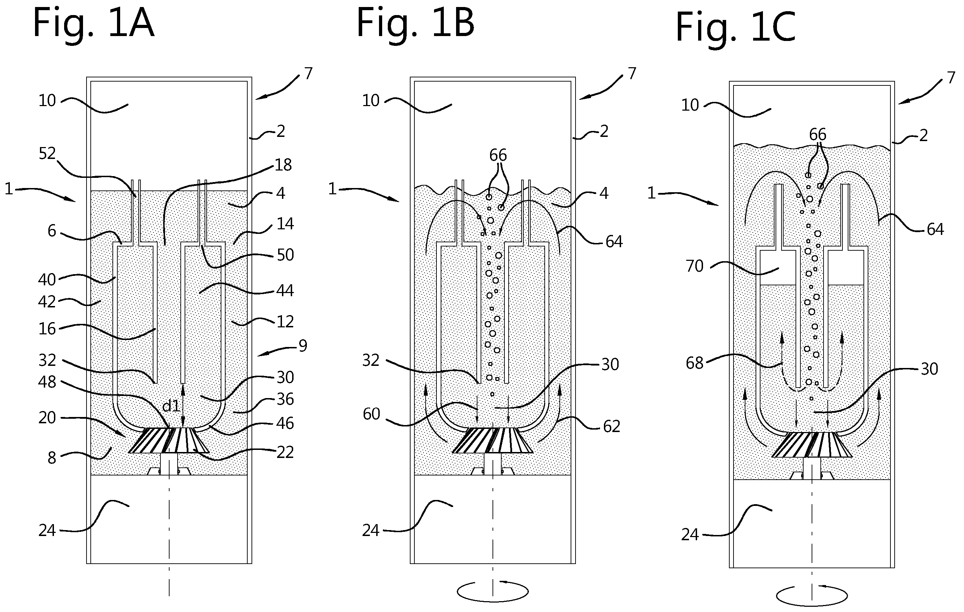

Figure 1A shows an embodiment of a system 1 for gas-liquid separation according to the disclosure. The system comprises an enclosure 2 for holding a fluid 4. A fluid separation wall 6 is arranged in the enclosure 2. The wall 6 separates an upper section 7 of the enclosure from a lower section 9.

The liquid may comprise a liquid fraction 8 and a gas fraction 10. The ratio of fluid and gas may change during operation of the system. As an example, see Fig. 1A, when the system is not in operation, the liquid fraction 8 of the fluid may substantially be positioned in the lower section 9 of the enclosure; the gas fraction 10 of the fluid may substantially be positioned in the upper section 7.

The system 1 comprises at least one first conduit 12 for upward flow of the fluid 4 towards a corresponding first opening 14 of the fluid separation wall 6. At least one second conduit 16 is provided for flow of the liquid downward from a corresponding second opening 18 of the fluid separation wall 6.

The system 1 comprises a circulation system 20 for circulating the fluid 4 downward via the at least one second conduit 16 and upward via the at least one first conduit 12.

Optionally (see for instance Fig. 1A), the circulation system comprises a pump system. The pump system may comprise, for instance, at least one fluid driving element 22, such as a rotor or impeller. The fluid driving element 22 may be connected to a drive system 24, adapted to rotate or otherwise drive the fluid driving element.

The system 1 may comprise a flow deceleration section 30. The deceleration section 30 may be arranged at or near a lower end 32 of the at least one second conduit 16. Herein, the at least one first conduit 12 may be longer than the second conduit 16, leaving a distance d1 between the end 32 of the second conduit and a lower end 36 of the first conduit.

In an embodiment, the system 1 comprises a tubular wall or conduit 40 arranged within the enclosure 2. An annulus 42 between the tubular wall 40 and the enclosure 2 may form, or be comprised of, the first conduit 12. A gas capture section 44 may be comprised of a space between the tubular wall 40 and the at least one second conduit 16.

A lower end of the tube 40 may comprise a narrowing section 46. Said narrowing section may comprise at least one opening 48. The narrowing section is adapted to guide fluid flow towards said opening. The fluid driving element 22 of the circulation system 20 may be arranged at or near the fluid opening 48.

The separation wall 6 may comprise one or more third openings 50. The third openings may allow passage of gas. The third openings 50 may be provided with corresponding tubes 52. The tubes 52 may extend upward. In a practical embodiment, the tubes 52 extend up to an upper end of the enclosure 2.

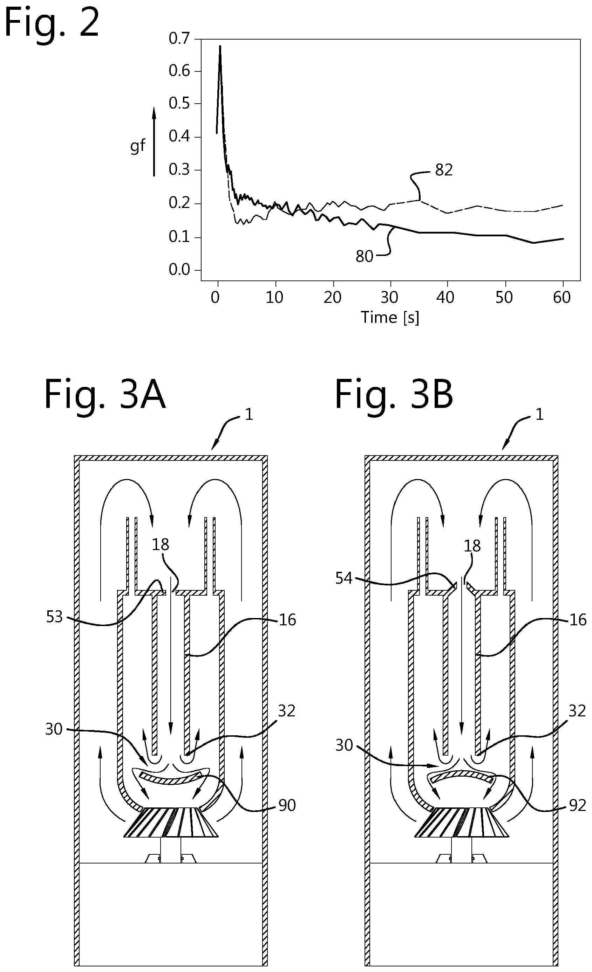

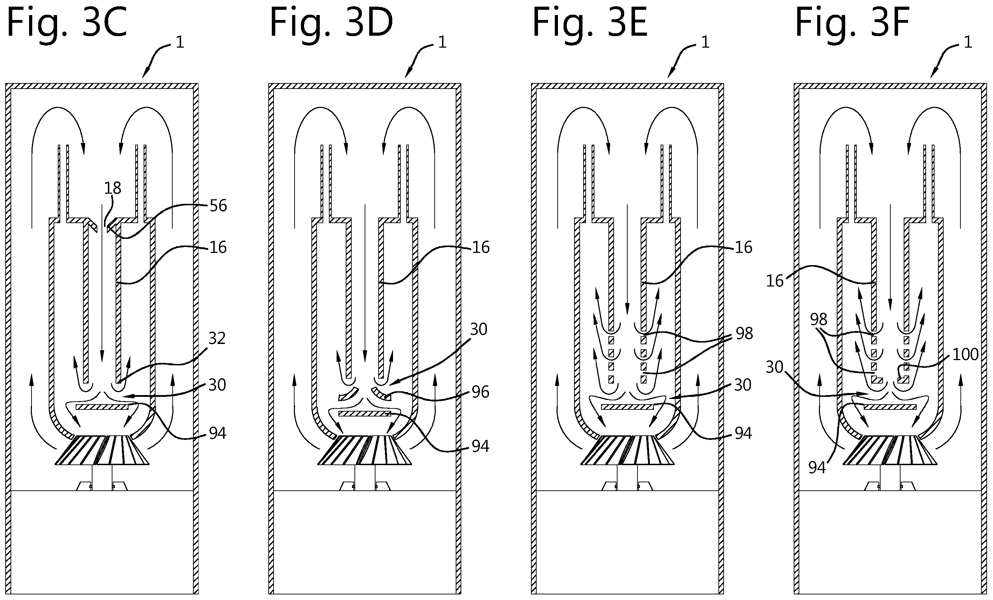

In an embodiment, see Fig. 3A, the at least one second conduit 16 may be provided with a flow restriction 53. The flow restriction may include a flange (Fig. 3A). The flow restriction may include a neck 54 extending outward from the second conduit 16 (Fig. 3B). The flow restriction may include a flow guide 56 directed into the second conduit (Fig. 3C). Alternative options are conceivable for the flow restriction. For instance, the entire second conduit 16 may have a relatively narrow cross section.

Generally referring to Figures 1A to 1F, a method to operate the system 1 for separating the gas fraction from the fluid 4 may include the following steps.

Figure 1A shows the system 1A in a position wherein the circulation system 20 is turned off. Herein, the gas fraction 10 in the fluid 4 has typically moved to the upper end 7 of the enclosure 2. The liquid fraction 8 is collected in the lower end 9.

Referring to Figure 1B, when the circulation system 20 commences to operate, the fluid 4 starts to circulate within the enclosure. Herein, the circulation system cycles or circulated the fluid 4 in the system 1 downward via the at least one second conduit 16 and upward via the at least one first conduit 12. See the arrows 60, 62, 64 respectively in Figure 1B. While circulating, the fluid 4 starts to include part of the gas fraction 10, as exemplified by bubbles 66.

Referring to Figure 1C, when the fluid flow exits the lower end 32 of the at least one second conduit 16, the flow decelerates. Herein, at least part of the gas fraction as included in the fluid flow moves to the side and rises upward along the side of the second conduit. See arrow 68. Herein, a part of the gas fraction 70 starts to accumulate along the second conduit 16 and below the separation wall 6.

As shown in Fig. 1C, the gas fraction 70 accumulates in the gas collection section 44. Said section is, for instance, located between the walls of the tube 40 and the second conduit 16. At the top, the gas fraction 70 is delimited by the separation wall 6.

The fluid flow decelerates when exiting the downflow conduit. For instance, the tube 40 has a wider cross section than the second conduit 16, so that the fluid flow leaving the lower end 32 of the conduit 16 decelerates. Due to the continuing fluid flow in the second conduit, which is directed downward, the gas fraction, which wants to move upward, is forced outward with respect to the second conduit, and moves up when possible, and into the gas collection section 44.

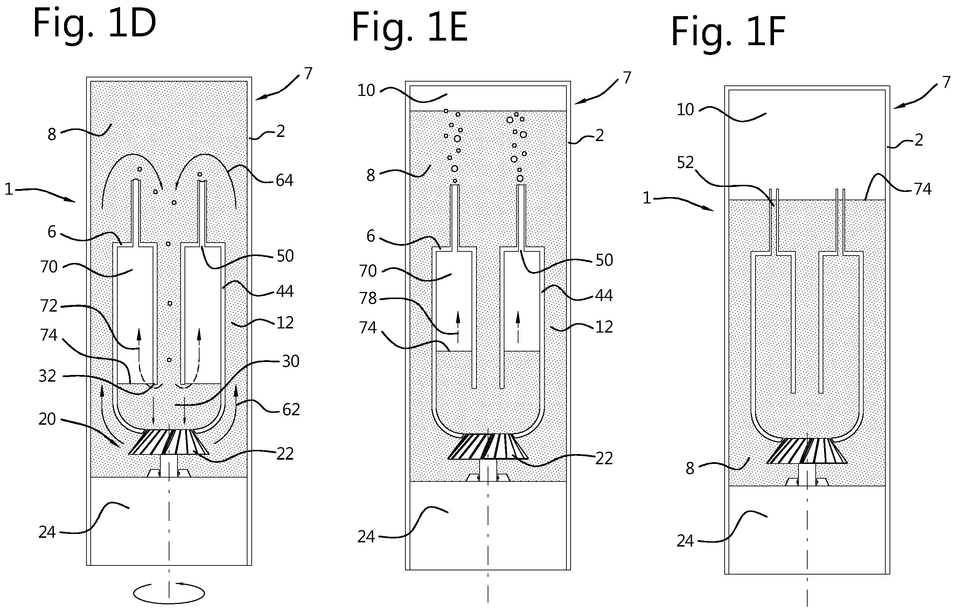

Figure 1D exemplifies a steady state or mode of operation. Herein, the gas fraction 70 has accumulated in the gas collection section 44. Virtually no gas is left in the upper end 7 of the enclosure.

Optionally, some of the collected gas 70 may escape from the gas collection section 44 via the one or more third openings 50. The flow rate of escaping gas is, however, (significantly) smaller than the flow rate of gas potentially returning via the fluid flow, see arrows 72. In this situation, the circulation system 20 remains active, circulating the fluid to maintain the steady state. Herein, the gas fraction 70 is substantially entirely collected in the gas collection section, while the top end of the enclosure 2 is virtually free of gas and filled with liquid.

To balance the gas outflow with the gas inflow, for instance, the at least one third opening 50, in total, has an cross sectional area which is smaller than a cross sectional area of the at least one first opening and/or a cross sectional area of the at least one second opening. In a practical embodiment, the rate of gas outflow through the third openings is smaller than the rate of inflow of gas into the gas collection section during operation of the system 1.

A cross sectional area of all the at least one second openings 18 combined is typically smaller than a cross sectional area of all the at least one first openings 14 combined.

In a practical embodiment, the flow surface $A_i$, i.e. the total cross sectional area available for flow through the combined opening(s) or conduit(s) i, relates as: $A_1 > A_2 > A_3$. Herein, flow rate is determined as $\rho * v * A$, wherein $\rho$ is the density of the fluid, v the velocity of the fluid, and A is the available flow surface.

While sizes may depend on the particular application, the flow surface or flow area of the respective openings or conduits relative to each other, and the resulting flow rate in the respective conduits, enable the circulation system 20 to increase the pressure in the upper section 7 of the enclosure by circulating the fluid, while avoiding bypass via the third opening(s).

In a practical embodiment, a pressure increase in the top end section 7 of the enclosure due to circulation may be on the order of 0.1 bar with respect to a reference pressure. In a practical embodiment, the cross sectional area of the third opening(s) 50 is on the order of about 0.1 to 10% of the cross sectional area of the at least one second opening(s) 18. The cross sectional area of the third opening is, for instance, about 0.5 to 5% of the cross sectional area of the at least one second opening 18. The cross sectional area of the third opening is, for instance, about 1 to 2% of the cross sectional area of the at least one second opening 18. The cross sectional area of the third opening is, for instance, at most about 10% of the cross sectional area of the at least one second opening 18. The cross sectional area of the third opening is, for instance, at most about 8% of the cross sectional area of the at least one second opening 18, for instance at most 7%, for instance at most 6%, for instance at most 5%, for instance at most 4%, for instance at most 3%, for instance at most 2%, for instance at most 1%, for instance at most 0.5%.

In a practical embodiment, the cross sectional area of the second opening(s) 18 is on the order of about 10 to 50% of the cross sectional area of the at least one first opening(s) 14. The cross sectional area of the second opening(s) 18 is, for instance, about 20 to 30% of the cross sectional area of the at least one first opening 14. The total cross sectional area of the second opening(s) is, for instance, on the order of 25% of the total cross sectional area of the first opening(s).

As exemplified below, for application in a molten salt reactor, the liquid 4 is typically molten salt. Herein, the flow rate of the circulating liquid can be adjusted such that the gas fraction remaining in the top end 7 of the enclosure remains below a threshold suitable for steady state operation of a nuclear reaction in the fuel.

The maximum amount of gas which can be collected in the gas collection section is determined by the volume of the gas collection 44. In part, said volume is determined by the length of the second conduit 16 with respect to the separation wall 6. A liquid level 74, which indicates the boundary between the gas fraction 70 and the remaining liquid, may, at most, be located at the lower end 32 of the one or more second conduit (Fig. 1D). However, other types of applications may be envisaged as well. The system 1 may be designed such that the at least one second conduit 16 has a length exceeding a threshold, to allow all of the gas in the fluid to be collected in the gas collection section 44 during operation. In other words, the system is designed such that the at least one second conduit 16 extends into the liquid 8 during circulation.

Generally referring to Figure 1E, when the circulation system 20 reduces or stops the fluid flow, the gas fraction 70 may gradually starts to escape through the third openings 50, and through the optional gas tubes 52, through the wall 6 and into the upper end 7 of the enclosure. See gas bubbles 76 and arrows 78, which indicate the rising fluid level 74.

Generally referring to Figure 1F, when the circulation of fluid stops, after a predetermined time most of the gas 10 may have re-entered the top end 7 of the enclosure.

For a nuclear reactor based on molted salt, the gas fraction 10 in the top end 7 will typically exceed the threshold for achieving reactor criticality, meaning that the nuclear reaction in said top end will stop. Thus, the present disclosure provides a relatively simple yet highly reliable, robust and predictable system and method enabling to switch a nuclear reaction in a molten salt reactor on and off. The system can switch between a mode of steady state operation and a state wherein the nuclear reaction ceases to be active.

Figure 2 shows results of simulations showing the enhanced gas-liquid separation efficiency through the addition of the downcomer pipe. Figure 2 shows simulations for operation of the system 2. Herein, first results 80 indicate the gas fraction over time for a system 2 including at least one second conduit. Second results 82 indicate the gas fraction gf in the upper end of the system when the system lacks a second conduit, i.e. wherein the wall 6 only comprises a second opening 18 without the conduit 16. Both results 80, 82 are based on the same system dimensions and modes of operation, including fluid flow rate and fluid composition.

As exemplified by the simulation results shown in Figure 2, the addition of the second conduit(s), which may be regarded as a downcomer tube for fluid flow, enables to further decrease the void fraction in the upper end of the system over time. Without the downcomer tube, the bubbles of gas continue to be recirculated, limiting the lower limit of the gas fraction. Therefore, the downcomer tube significantly improves the inline gas-liquid separation, and thus the overall functionality of the system 1.

Generally referring to Figures 3A to 3T, various potential modifications and improvements are conceivable with respect to the system as described with respect to Figures 1A to 1F. The overall system, however, will operate in generally the same way.

Please note that the embodiments shown in Figures 3A to 3T may typically be rotationally symmetrical. Nevertheless, other configurations may be conceivable as well. For instance, tubular elements may be cylindrical. Tubular sections may, however, also have a cross section other than round, such as for instance oval, square, or hexagonal.

Figure 3A shows the system 1 including a flow deceleration section 30 comprising a curved surface 90. The curved surface 90 partially blocks and redirects the fluid flow exiting the second conduit 16 radially outward. The surface 90 may have sides which are curved upwards.

Figure 3B shows the flow deceleration section 30 comprising a curved surface 92. The curved surface 92 partially blocks and redirects the fluid flow exiting the second conduit 16 radially outward. The surface 92 may have sides which are curved downwards.

Figure 3C shows the flow deceleration section 30 comprising a plate element 94. The plate 94 partially blocks and redirects the fluid flow exiting the second conduit 16 radially outward. The plate 94 may be substantially flat.

Figure 3D shows the flow deceleration section 30 comprising one or more radial flow guides 96. The flow guide(s) 96 may be combined with, for instance, the plate element 94. The flow guide 96 may be ring shaped and have a curvature to direct the fluid flow, for instance radially outward.

Figure 3E shows the flow deceleration section 30 comprising one or more gas openings 98 arranged in a side of the one or more second conduits 16. Said gas openings may be provided in, for instance, a lower end of the conduit 16. The gas openings 98 may be combined with other elements, such as, for instance, the plate element 94. The gas openings 98 improve and speed up the rate of gas collecting in the gas collection section 44.

Figure 3F is similar to Figure 3E. Herein, the lower end of the second conduit 16 may be provided with a narrowing section 100. Said narrowing section may include, for instance, a flange extending inward from the wall of the conduit 16.

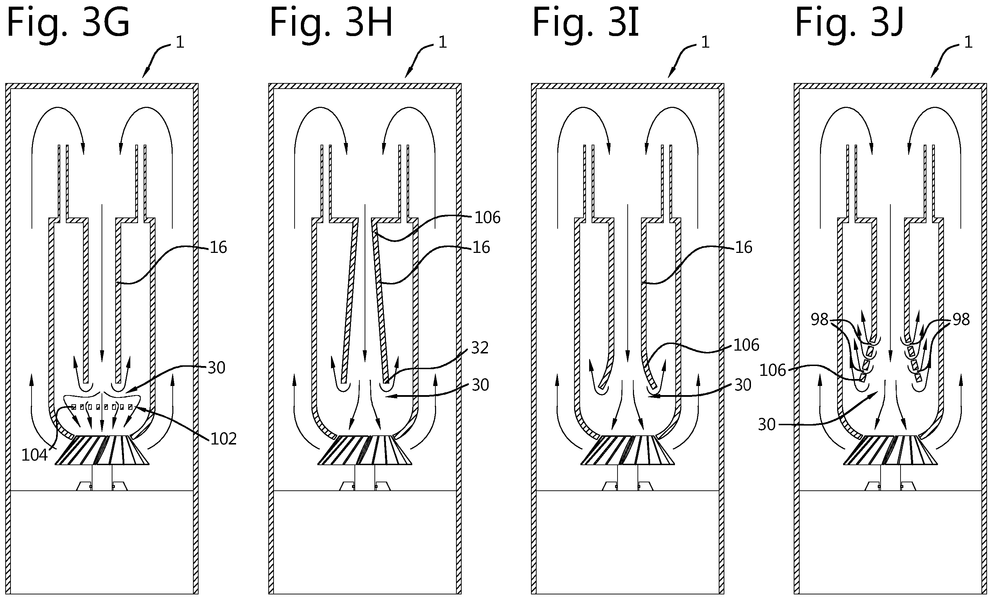

Figure 3G shows the flow deceleration section 30 comprising a plate element 102 which is provided with a number of openings 104. The plate element 102 may be flat or curved, similar to the embodiments shown in Figs. 3A to 3C. The openings 104 allow part of the fluid flow to pass, while directing another part of the fluid flow radially outward.

Figure 3H shows an embodiment, wherein the second conduit 16 tapers in downward direction. In other words, the conduit 16 is conical, having a first diameter at or near its top end 106 and a second, wider diameter at the lower end 32. Due to the increasing internal diameter of the second conduit, the flow rate of the fluid through the conduit will decrease while the fluid progresses through the conduit.

Figure 3I shows an alternative, wherein the lower end 32 of the second conduit 16 is provided with a widening section 106. Said widening section 106 may be substantially trumped shaped, as shown in Figure 3I.

Alternatively, said widening section may be substantially cone shaped, as shown in Figure 3J. The widening section may, for instance, be provided with a number of gas openings 98.

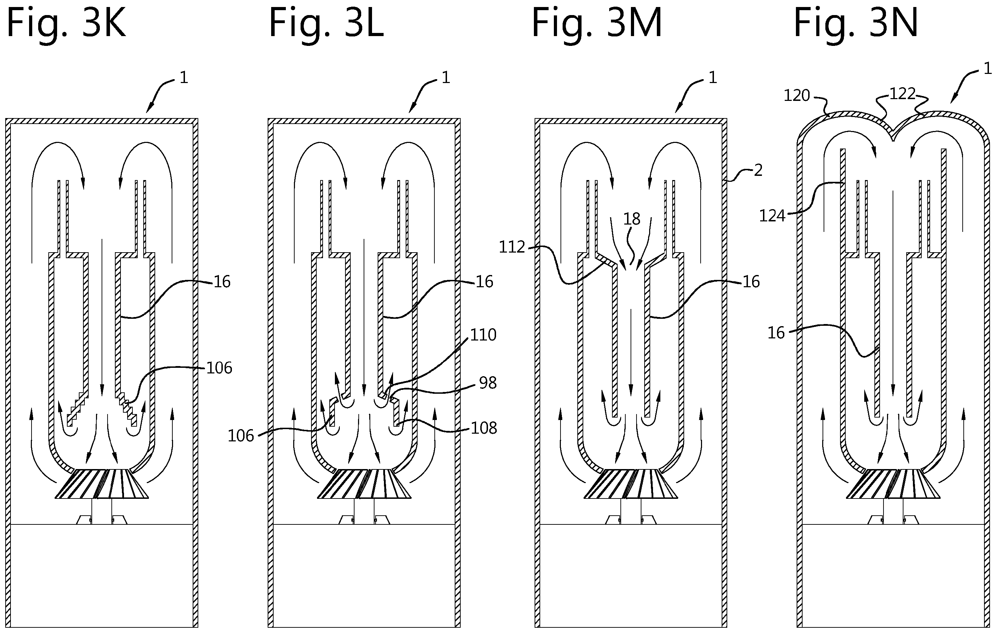

Referring to Figure 3K, the widening section 106 may have a stepped profile in cross section.

Referring to Figure 3L, the widening section 106 may have a profile comprising a tubular end section 108 having a wider diameter than a main section of the second conduit 16. The wider end section 108 may be connected to the main section of the second conduit 16 via, for instance, a shoulder section 110. Said shoulder section 110 may be provided with a gas opening 98.

Referring to Figure 3M, the top end 106 of the second conduit 16 may be provided with a tapering section 112. The tapering section 112 basically functions as a flow guide, directing the flow of fluid into the second conduit. The tapering section 112 may have shapes varying with respect to the Figure 3M. For example, the edges of the tapering section 112 may have a curved shape to avoid turbulence.

Referring to Figure 3N, the top end 120 of the enclosure 2 may be provided with one or more curvatures 122. The curvatures 122 in the top end 120 basically function as a flow guide, for directing the flow of fluid. The curvatures 122 limit turbulence. The shape of the curvatures 122 may be optimized for the design flow rate of the steady state operation of the system 2.

In an embodiment, the system 1 comprises an upward extension of the respective at least one first conduit 12. Said upward extension may extend up to a top end of the enclosure, while leaving space therebetween for fluid flow. For instance, a second tubular wall 124 may be provided for guiding fluid flow. The second tubular wall may extend upward from the separation wall 6. The tubular wall 124 may extend up to a top end of the enclosure 2, while leaving space between the wall 124 and the enclosure for fluid circulation. The upward extension of the at least one first conduit, for instance the tubular wall 124, may be combined with any of the embodiments described herein.

Upon start of operation (see for instance Figures 1B and 1C), the tubular wall 124 guides the upward flow of fluid towards the top end of the enclosure, and into the gas fraction 10. Thus, the upward flow conduit enhances and speeds up mixing of gas bubbles into the circulating fluid.

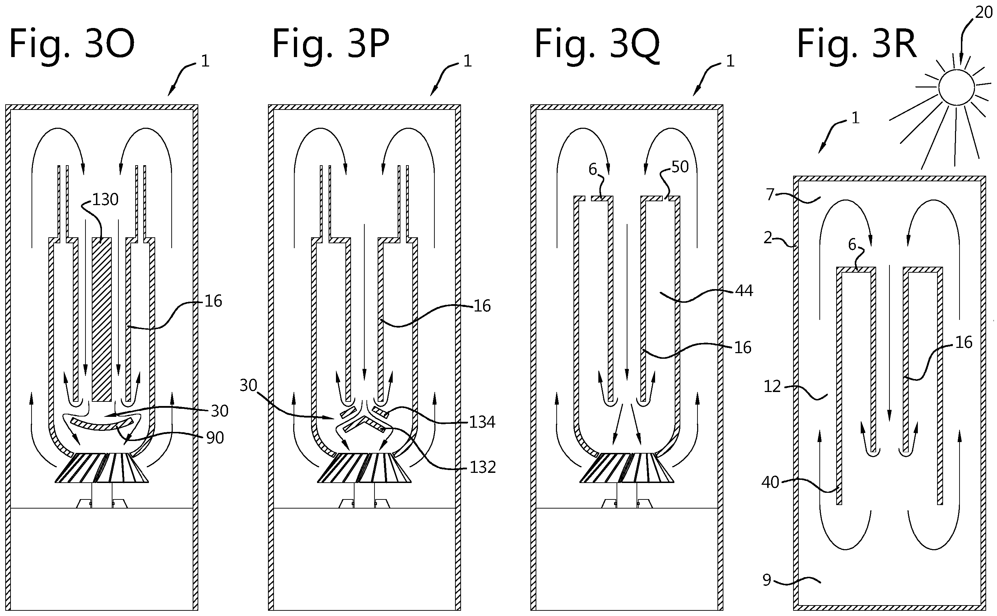

Referring to Figure 3-O, one or more of the second conduits 16 may be provided with an internal flow guide 130. The flow guide 130 may enable to shape or otherwise control the flow of fluid through the conduit.

Referring to Figure 3P, the deceleration section 30 may be provided with one or more flow guides. The flow guides may have any suitable shape or form. For instance, one flow guide 132 may have the shape of a conical hat. The hat shaped flow guide 132 may be combined with a second flow guide 134 which may have an opening in the center. The flow guides may substantially decelerate the fluid flow, cause turbulence, and/or direct the fluid flow radially outward.

Referring to Figure 3Q, in an embodiment, the gas openings 50 are provided in the separation wall 6, to allow gas to escape from the gas collection section. However, the gas openings are not provided with additional gas tubes 52.

Referring to Figure 3R, the circulation system 20 may include other means than a pumping system. For instance, the circulation system 20 may be based on a temperature difference. Herein, the temperature difference may be caused by a heat source for heating one end of the enclosure 2, for instance the top end or a lower end of the at least one first conduit 12. Alternatively or in addition, a cold source may lower a temperature of another end of the enclosure 2 and/or a lower end of the at least one second conduit.

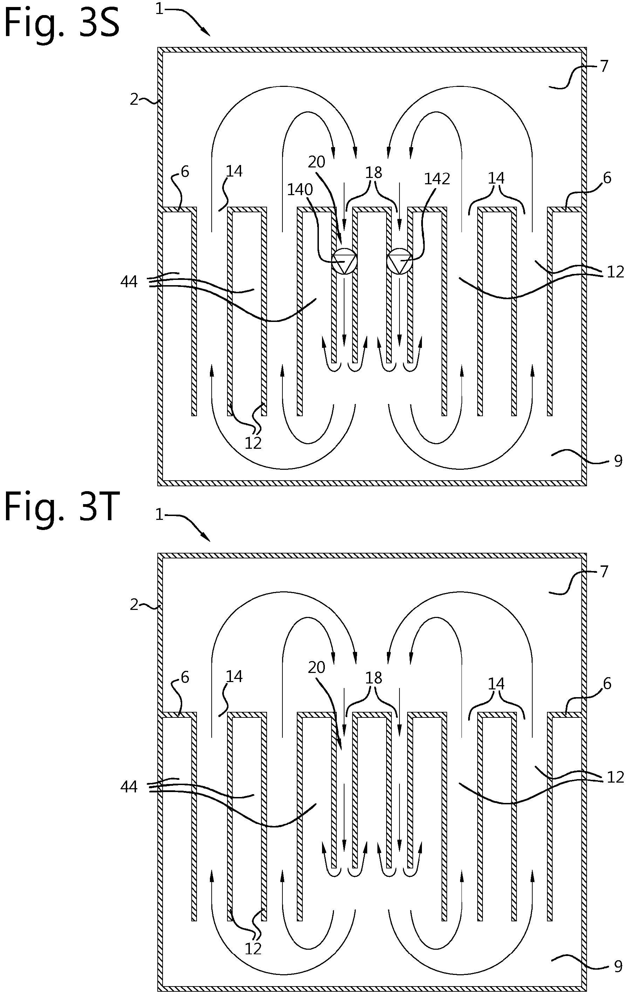

Figure 3S shows an embodiment of the system 1, comprising multiple first conduits 12 and/or multiple second conduits 16. The conduits extend downward from respective first openings 14 and second openings 18 in the separation wall 6 The separation wall may be a plate or flange, substantially extending over the entire cross section of the enclosure 2. The circulation system 20 may comprise one or more pumps 140, 142. One or more, for instance all, of the second conduits 16 may be provided with a respective pump. Figure 3T shows a generic version of the system 1. The circulation system may be any suitable system for circulating the fluid.

In operation, the gas fraction may collect in the gas collection section 44. The gas collection section herein may be comprised of the space below the separation wall 6 and between the enclosure 2 and the respective first conduits 12 and second conduits 16. The first conduits 12 may have a first length exceeding a second length of the second conduits 16.

Practical embodiments

The system and method as described above can be applied to, for instance, a nuclear reactor using liquid nuclear fuel.

Liquid fuels may contain dissolved nuclear fuel. Molten salt fuels may include mixtures of actinide salts (e.g. thorium, uranium, fluoride, and chloride). The mixture may include other salts. Molten salts are used in liquid form above their typical melting points of several hundred degrees C.

Molten salt fuels were, for instance, used in the MSRE known as the Molten Salt Reactor Experiment, as well as other liquid core reactor experiments. The liquid fuel for the molten salt reactor was a mixture of lithium, beryllium, thorium and uranium fluorides: $LiF-BeF2-ThF4-UF4$ (72-16-12-0.4 mol%). It had a peak operating temperature of 705 °C in the experiment, but could have operated at much higher temperatures since the boiling point of the molten salt was in excess of 1400 °C.

Other options of liquid fuels include aqueous solutions of uranyl salts. For instance, the aqueous homogeneous reactors (AHRs) use a solution of uranyl sulfate or other uranium salt in water. Other options include liquid metals or alloys. The dual fluid reactor (DFR) has a variant DFR/m which works with eutectic liquid metal alloys, e.g. U-Cr or U-Fe.

Herein, the system and method provide a solution wherein passive draining and continuous gas removal from the fluid 4 can be combined. This is achieved through the displacement of gas by fluid flow, to a gas plenum or gas capture section 44, located below the active core region, upon activation of the circulation system.

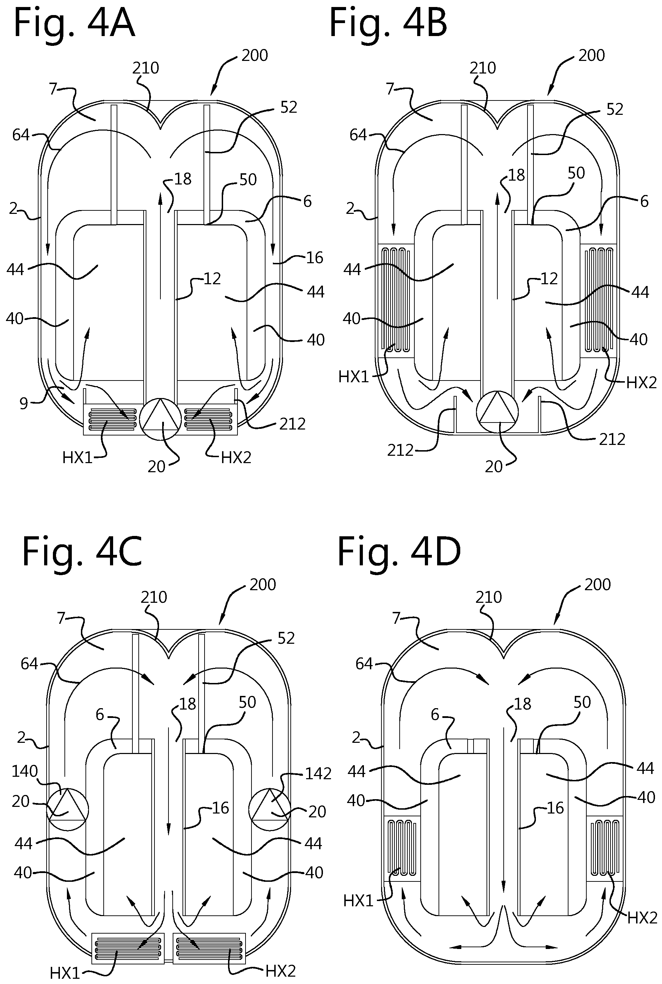

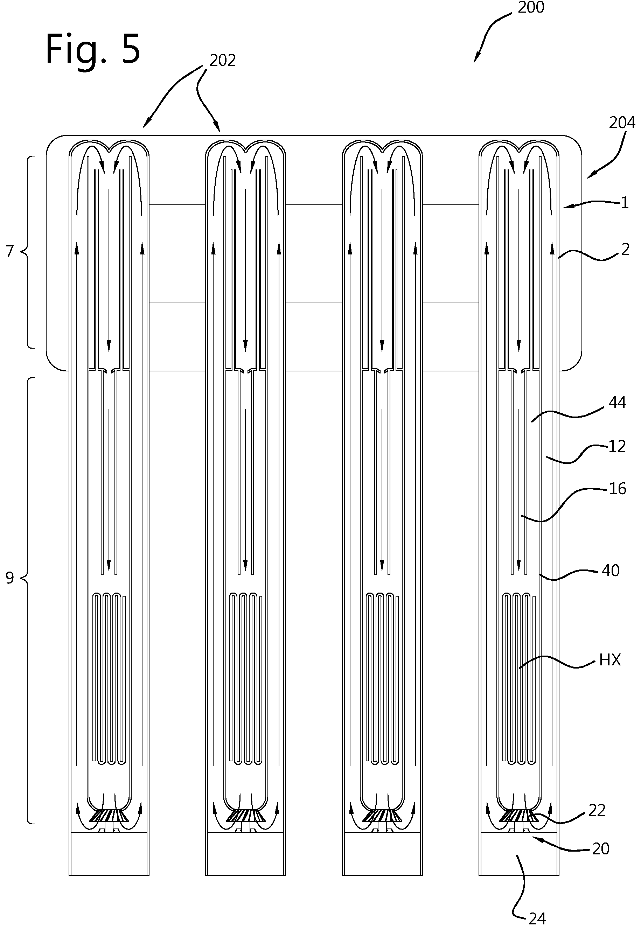

Figures 4A to 4D and Figure 5 show examples of embodiments of a nuclear reactor 200. The respective reactors 200 use liquid fuel and are provided with a system 1 according to the present disclosure. The embodiment shown in Figure 3S is generally applicable to a relatively large, single core nuclear reactor provided with multiple tubes for up-flow and/or downflow of the liquid fuel. The embodiment of Figure 5 includes multiple reactor modules 202 feeding the same nuclear core region 204.

In a reactor system 200, typically, one or more heat exchangers HX, HX1, HX2 are included. For instance, a heat exchanger HX may be arranged above the circulation system (Fig. 5). Alternatively, two heat exchangers HX1, HX2 may be arranged at opposite sides of the circulation system 20 (Fig. 4A, 4B).

Figure 4A shows a reactor 200 having a top end 210 having a curvature to substantially guide fluid flow. The fluid flow, in operation, may circulate downward via an annular region along the enclosure 2, and upward via a central conduit. A flow obstruction wall or flange 212 may be arranged at or near a lower end of the second conduit 16 for downflow. The flange 212 basically obstructs the fluid flow and thereby causes deceleration and turbulence, allowing the gas fraction to escape and move upward into the gas plenum 44. One or more heat exchanges HX1, HX2 may be arranged adjacent to the circulation system 20.

Figure 4B shows a reactor 200 having a top end 210 having a curvature to substantially guide fluid flow. The fluid flow, in operation, may circulate downward via the annular region along the enclosure 2, and upward via a central conduit. A flow obstruction wall or flange 212 may be arranged at or near a lower end of the second conduit 16 for downflow. The flange 212 basically obstructs the fluid flow and thereby causes deceleration and turbulence, allowing the gas fraction to escape and move upward into the gas plenum 44. One or more heat exchanges HX1, HX2 may be arranged in the annular region which constitutes the second conduit 16 for fluid downflow. The circulation system 20 is provided near a lower end of the enclosure 2.

Figure 4C shows a reactor 200 having a top end 210 having a curvature to substantially guide fluid flow. The fluid flow, in operation, may circulate downward via a central conduit and upward via the annular region along the enclosure 2. A flow obstruction wall or flange 212 may be arranged at or near a lower end of the second conduit 16 for downflow. The circulation system 20 may comprise one or more pumps 220, 222, which are arranged in the annular region between the enclosure 2 and the tubular section 40. One or more heat exchanges HX1, HX2 may be arranged at or near a lower end of the at least one second conduit 16 for fluid downflow. Herein, in addition to exchanging heat for power generation, the heat exchangers basically obstruct the fluid flow and thereby cause deceleration and turbulence, allowing the gas fraction to escape and move upward into the gas plenum 44.

Figure 4D shows a reactor 200 having a top end 210 having a curvature to substantially guide fluid flow. The fluid flow, in operation, may circulate downward via a central conduit and upward via the annular region along the enclosure 2. The circulation system 20 may comprise one or more pumps 140, 142, which are arranged in the annular region between the enclosure 2 and the tubular section 40. One or more heat exchanges HX1, HX2 may be arranged within the annular region of the enclosure, which forms the first conduit 12 for upward flow of the fluid. A lower end of the second conduit 16 opens in the lower end of the enclosure, wherein the fluid flow decelerates due to the increased cross section area for flow. The latter allows the gas fraction to escape and move upward into the gas plenum 44.

Alternative to the nuclear reactors of Figures 4A to 4D, a single core nuclear reactor may also include the embodiment of the system 1 of the disclosure as exemplified in Figure 3S. Herein, the core region will be above the separation wall 6. Said wall may include multiple first conduits 12 for upward fluid flow and/or multiple second conduits 16 for downward fluid flow. One or more pumps 140, 142 may be arranged in conjunction with the first conduits and/or the second conduits, as exemplified in Figures 3S and 4A to 4D.

Figure 5 shows a core section 204. Multiple reactor modules 202 can be arranged. Each module 202 may be replaceable individually from the other modules. When in operation, the top ends 7 of the respective modules 202 together may constitute a critical mass of nuclear fuel. Each module may include a heat exchanger HX for exchanging heat of the heated nuclear liquid fuel for power generation in power generation equipment (not shown) located downstream. Herein, the heat exchangers may be arranged below the at least one second conduit 16 for receiving the downward flow of liquid. The heat exchangers may be located, for instance, within the tube 40 and above the circulation system 20 of a respective module 202.

As described with reference to Figures 1A to 1F, when the circulation system 20 is not operating, a gas volume may be collected at the top of the enclosure, while all liquid is below, due to gravity. When the pump system starts, the liquid is pumped upwards or downwards. The fluid may flow up through, for instance, the annular section between the containment 2 and an outer radius of an upflow guide tube, such as tube 40.

The fluid flow causes recirculation of the fuel liquid during reactor operation. When the recirculation system 20 is shut down, the reactor is passively drained through the act of gravity. Herein, liquid flow downward due to gravity, forcing the gas fraction back up from the gas plenum 44 to the core section. For a single module reactor, the core section is basically formed by the top end section 7. For a multi-module reactor (as exemplified in Fig. 5), the core may be formed by a combination of multiple top end sections 7 of respective modules.

The removal of gas from the liquid during pump operation and liquid circulation may be continuous. As such, the liquid, typically molten salt, can be efficiently degassed during both reactor startup and reactor operation.

The system of the disclosure obviates the need for a helium bubbling system (requiring additional complexity through introducing bypass flows of the nuclear liquid fuel, additional piping connections within or connected to the primary containment, and an active bubbling system, hence introducing additional risks). In addition, the reactor can be passively drained without relying on the melting of a so-called freeze valve, resulting in a guaranteed fast reactor shutdown when the pump and nuclear fuel liquid circulation stops, creating a more reliable passive safety system with reduced complexity and less risks.

The displacement of the core filling gas to the gas plenum during reactor startup and in-line phase separation of volatile elements and compounds from the nuclear liquid fuel during normal operation can be achieved through the use of an appropriate flow guide geometry. As such, the system includes an appropriate design of the appropriate flow guides combining the functionality of both passive draining and continuous gas removal. Herein below, additional principles relating to the flow guide geometry are outlined. The one or more first and second conduits may achieve the desired inline gas-liquid separation. The conduits combine gas separation with passive draining, which makes use of the localized gas volume below the active core region.

When the fluid reaches the top 210 of the enclosure 2, the flow turns around and flows towards the at least one second opening, which has a flow area which is smaller than a flow area available for upward flow. Herein, the second opening(s) may be provided with a restrictor, reducer or orifice (Figures 3A to 3C). The at least one second opening may be a single opening or comprise multiple openings. The openings, holes or slits may have a spherical, square, rectangular or annular shape. See the embodiments described above with respect to the at least one second opening. The openings provide a decrease in (total) flow cross section compared to the liquid volume above. The at least one first conduit 12 for upward flow of fluid may be provided with an upward extension, see for example Figures 3N and 5, to enhance the mixing of gas with the circulating fluid.

The reduced flow area due to a restriction in area of the at least one second conduit or openings leads to a pressurization of the upper volume of the enclosure and the annulus from the pump outlet upwards, upon circulation of the fluid. The reduced flow area also leads to an increase in the liquid velocity, such that the liquid velocity of the circulating liquid exceeds the rise velocity of even the largest stable gas bubbles. This principle will be further elaborated in the forthcoming text.

Passing the restrictor, the flow then enters one or multiple downcomer tubes, which guide the flow to a liquid volume below. Herein, the pump system moves the liquid and pushes it back upward, closing the circulation loop.

Between the downcomer tube and the up flow guide tube, in the deceleration section, the flow velocity of the liquid is relatively low, such that the downwards velocity of the fluid is smaller than the rise velocity of even the small gas bubble sizes within the (typically log-normal) bubble size distribution. This is the region where the gas will move to the gas plenum 44. The heavy molten salt will move down due to gravity and the gas bubbles will move upwards due to buoyancy to the gas plenum or gas capture section 44.

The at least one second conduit 16 for downflow creates a physical separation between the gas and the liquid flow passing through the second opening(s). This prevents the gas from being entrained back into the liquid.

During steady state operation, the downcomer tube outlet is located below the lower liquid volume surface and below the interface 74 between the liquid volume and the gas plenum, and typically well above the pump impeller 22. This prevents gas from being entrained by liquid flow in or exiting the downcomer tube.

In addition, the downcomer tube leads to a direct connection between the top liquid volume and the lower liquid volume below the gas plenum volume, avoiding liquid coming down from the top fluid volume, diverging after the restrictor, spraying through the gas volume and impinging on the lower liquid volume surface (which effectively results in a plunging jet flow configuration). This would significantly enhance gas entrainment through viscous shear , pressure drag and the impact of the jet on the surface of the liquid pool and corresponding gas bubble formation in the moving liquid. The gas bubbles are subsequently drawn into the pump, and recirculated. In this way, gas will continue to (partially) recirculate, and the liquid will therefore not become gas bubble free, even after a long recirculation time, due to the continuous entrainment of gas resulting in the formation of new gas bubbles. The downcomer tube starting in the upper liquid volume, and ending submerged in the lower liquid volume is therefore a substantial benefit for the system to work, and to more effectively de-gas the liquid and avoid gas entrainment.

When commencing operation, the bubbles in the liquid are gradually released to the gas capture section 44 from the outlet of the downcomer 16. Once the gas bubbles have been released to the gas plenum, they do not re-enter the fluid stream. As such, over time, the fraction of recirculated gas bubbles (or the effective void fraction), will continue to decrease until, after a predetermined threshold time of operation, the liquid flow will essentially be gas bubble free.

As such, during steady state operation, the resulting fluid flow is considered to be substantially single phase. Herein, substantially only the liquid (such as molten salt nuclear fuel) fills the reactor core, and flows through the downcomer tube to the pump, to be recirculated. The gas fills the gas capture section 44, such as the space between the downcomer tube and the upflow tube (see Figure 1A).

When the pump stops, a stagnant situation occurs, where the gas and liquid remain where they are, since the gas is constrained in the gas capture section. For instance between the flow reducer / restrictor / orifice walls and the downcomer tube walls. The gas cannot move upwards, unless a valve, an opening or gas openings (such as round holes, rectangular slits or another configuration to allow gas to gradually escape), or a degassing tube creates a flow bypass through the restrictor and allows the gas to flow back up into the upper end of the enclosure. At the moment the pump is switched off, the gas is no longer pushed down by the hydraulic head of the fluid. This option may be included in case passive draining of the top section is required when the pump stops. This can for example be very useful in a molten salt reactor design, where the top part forming the critical core is passively drained when the pump stops, creating a passive draining feature, making potentially complex systems like a freeze valves unnecessary.

In summary, the system of the disclosure involves the combination of a flow reducer / restrictor / orifice with a downcomer tube to achieve a gas-free upper section, from an initial situation where the upper section is filled with gas. Herein, the gas is displaced and captured in a gas capture section. Examples of the gas capture section are provided above, in conjunction with Figures 1A and 3A to 3S.

The setup allows for continuous removal of gas from the flowing liquid exiting the downcomer tube. In addition, the invention involves the use of degassing tubes / valves or other means of generating a flow bypass through the restrictor which allows the gas to flow back up into the upper liquid volume at the moment the pump is switched off, which allows the passive draining of the reactor core.

This has been numerically simulated and experimentally validated in a scaled test facility using a simulation fluid and gas (see Figure 2 for exemplary simulation results).

After an initial start-up period (Figures 1 B and 1C), a stable, and (almost) single-phase flow can be achieved (Figure 1D), wherein the core (the upper end 7 of the enclosure) is filled with essentially gas-free liquid. The gas herein is displaced to the gas plenum or gas capture section 44. In addition, passive drainage can be achieved by the simple act of switching off the pump and allowing the captured gas to return to the core section.

During the initial phases of circulation, gas with significant bubble sizes may be re-circulated and are gradually removed from the liquid flow at the downcomer outlet. The mixing and circulation of these larger bubbles also capture smaller bubbles in the liquid, thereby effectively reducing the gas content in the liquid, also for gas that is dissolved or entrained and very small bubbles. Test observations have shown that gradually, most of the gas is removed from the salt and/or simulation fluid, and a very stable liquid is circulated during steady state operation, without any visible gas bubbles.

In a practical embodiment, for every geometry there is a lower flow speed limit, below which the upper liquid volume is not properly filled and the flow speeds are too low for gas to be removed from the upper liquid volume, within reasonable timeframes.

There is also an upper flow speed limit, above which the flow speeds at the downcomer outlet are too large and the gas is not effectively released to the lower gas volume. Instead, the gas bubbles remain entrained within the fluid, are insufficiently released to the lower gas volume and are directed back into the pump, to be repetitively re-circulated, which also does not enable proper gas removal from the lower liquid volume, within reasonable timeframes.

In a practical embodiment, the suitable range of flow speeds is determined by the flow speed that is needed to transport even the large gas bubbles downwards through the second opening of the fluid separation wall and to allow even the small gas bubbles to escape from the fluid flow after exciting the second conduit and rise upwards towards the gas plenum. This means that the downwards velocity in the liquid volume above the liquid separation wall needs to exceed the rise velocity of the largest bubbles present in the system, and the downwards velocity in the stagnant region between the first conduit, second conduit and the phase separation wall needs to be low enough that even the small bubbles can rise to the gas plenum. In practice, this means that:

- Bubbles will continue to recirculate until they leave the (relatively) high velocity fluid jet exciting the second conduit and enter the stagnant region between the first conduit, second conduit and the phase separation wall.

- The smallest bubbles will still be recirculated even if they do enter the stagnant region between the first conduit, second conduit and the separation wall. However, for larger void fractions, these small bubbles will eventually coalesce into larger bubbles and subsequently still be released from the second conduit into the gas plenum. As such, the remaining bubble sizes and the average void fraction during steady state operation will be very small, such that the flow may be considered single phase for practical applications.

The bubble rise velocity and the bubble size distribution depend on three dimensionless numbers:

the Reynolds number ( $Re_l = \frac{\rho_l u_l D_h}{\mu_l}$ ),

the Froude number ( $\frac{u_l}{\sqrt{gD_h}}$ ) and

the Weber number ( $We = \frac{\rho_l u_l^2 D_h}{\sigma_{gl}}$ ).

Herein, $\rho_l$ refers to the density of the liquid, $\mu_l$ refers to the viscosity of the liquid, $\sigma_{gl}$ refers to the surface tension between the gas and the liquid, g refers to the gravitational acceleration, $u_l$ refers to the velocity of the liquid flow and $D_h$ refers to the hydraulic diameter, which depends on the system dimensions.

A suitable correlation for estimating the bubble rise velocity is given by Park et al., "A Simple Parameterization for the Rising Velocity of Bubbles in a Liquid Pool," Nuclear Engineering and Technology, vol. 49, no. 4, pp. 692-699, Jun. 2017:

$$u_\infty = \frac{1}{\sqrt{f_{sc}^2 \left( \frac{144 \mu_l^2}{g^2 \rho_l^2 d_e^4} + \frac{\mu_l^{4/3}}{0.14425^2 g^{5/3} \rho_L^{4/3} d_e^3} \right) + \frac{1}{\frac{2.14 \sigma_l}{\rho_l d_e} + 0.505 g d_e}}}$$

Here,

$$f_{sc} = 1 + \frac{0.5}{1 + exp \left( \frac{\log Eo + 1}{0.38} \right)}$$

Herein, $Eo = \frac{We}{Fr}$ and $d_e$ refer to the equivalent bubble diameter. As mentioned earlier, bubble sizes in a flowing liquid are typically governed by a log-normal distribution. This is due to the balance between shear stresses and surface tension (i.e. bubble break-up and coalescence). See for instance Lehr et al, "Bubble-size distributions and flow fields in bubble columns," AIChE Journal, vol. 48, no. 11, pp. 2426-2443, Nov. 2002, doi: 10.1002/aic.690481103. As a practical example, for a system filled with a fluid comprising water and air, this correlation predicts that a velocity of approximately 0.5 m/s is needed to transport large air bubbles of approximately $d_e \approx 5\,cm$ downwards. On the other hand, by lowering the velocity below 0.2 m/s within the stagnant region between the first conduit, second conduit and the phase separation wall, bubbles with a diameter larger than $d_e \approx 1$ mm may rise upwards. As such, reducing the downwards velocity below the fluid separation wall by a factor of 2.5 compared to the downwards velocity above the fluid separation wall results in a gas-liquid separation system where gas is separated from liquid until only a small gas fraction with bubble sized below $d_e \approx 1$ mm is kept in recirculation.

This means that, in a practical embodiment, the range of flow speeds needs to be chosen such that the largest stable bubble sizes are transported downwards with the fluid flow past the second opening, and a stagnant region with a sufficiently small downwards velocity is created between the first conduit, the second conduit and the fluid separation wall, such that only the smallest bubbles (for instance the smallest 10-1% of all bubbles, or the smallest 1-0.1% of all bubbles, or even less depending on the system requirements) will not accumulate within the stagnant region between the first conduit, the second conduit and the fluid separation wall and instead be continuously recirculated, such that the steady state void fraction is sufficiently small to meet the system requirements and the resulting fluid flow (with a very small remaining void fraction and small bubble sizes) may be considered single phase for practical applications. For a particular system configuration, with a particular choice of the fluid (for instance water or molten salt) and a particular geometry, this includes a dedicated design of the restrictor, the downcomer tube, and the downcomer exit, for effective degassing to take place, and specific design of holes, valves or (de)gassing tubes to enable proper draining at pump trip. In case of liquid flow bypass of the restrictor via openings or (de-)gassing tubes connecting the gas volume with the upper liquid volume, the consequences of this for reactor behavior, or potential gas entrainment from the gas volume, is preferably taken into account.

Multiple variations are possible for the separation wall 6 and the second opening(s) 18 allowing fluid to circulate downward. The second opening(s) form a restrictor section, and may include, for instance, a single hole orifice plate, a multi-hole orifice plate or an annular orifice plate, The restrictor may include any other flow restrictor geometry that results in a flow resistance through a reduction of the flow cross section, leading to a pressurization of the reactor core. The purpose of the flow restrictor is to generate an over-pressure in the upper liquid section (normally the active core region in a liquid nuclear fueled reactor), by decreasing the liquid flow cross-section, hereby introducing a flow resistance. Hereby, the pressure as well as the downwards velocity is increased to effectively remove gas bubbles from the reactor core.

The shape of the restrictor is mainly determined by the desired flow profiles in the upper liquid volume section, and the way the fluid should flow towards, through and exit the restrictor. It is recommendable to design the restrictor in a way, that local recirculation or local low or stagnant flow regions are avoided above and below the restrictor, and to have adequate liquid flow velocities everywhere for effective gas removal.

The restrictor may be designed in conjunction with a suitable downcomer pipe. The restrictor can also include a guide flow that extends in the downcomer tube to guide the flow from the reduced flow area of the restrictor to the inner diameter flow area of the downcomer tube (see for instance Fig. 3M), avoiding flow instabilities or potential gas pockets by local recirculation or stagnant flow. The restrictor can also be placed further down in the downcomer tube, and in this way be integrated in the downcomer pipe.

The downcomer outlet can be shaped and designed in different ways, maximizing effective flow speed reduction and maximizing radial flow into the liquid volume allowing the gas to escape and move from the liquid surface to the gas volume, and limiting the probability bubbles enter the pump to be recirculated. For example, the downcomer pipe can have different shapes, from straight to a diameter increasing towards the downcomer outlet, thereby reducing the flow speeds and facilitating bubbles rising to the liquid surface of the lower fluid volume when exiting the downcomer tube. Further reduction in the flow speeds can be achieved by inserting a perforated plate to the downcomer outlet, to achieve a (more) uniform flow distribution in the radial direction. See, for example, Figures 3A to 3L.

In addition, a flow reducer (in the form of an orifice, a conical obstruction or any other method resulting in a reduction of the flow cross section) can also be inserted at the inlet of the downcomer tube, at the outlet, or somewhere half-way as an additional means of fine-tuning the pressure distribution to achieve sufficient overpressure within the core region. Through this flow contraction, a positive pressure can also be maintained within the downcomer tube with respect to the gas plenum. This also allows the generation of a bypass flow through the addition of small holes or slits to the downcomer tube, possibly enhancing the efficiency of the gas-liquid separation process. If designed properly, the overpressure within the downcomer tube (generated through the flow restrictor) will prevent gas from the gas plenum to be pulled back into the tube through so-called pressure drag forces.

In addition, an additional inline phase separator may be incorporated within the downcomer tube, for instance one based on centrifugal forces applying a tangential swirler to push the liquid to the downcomer walls and the gas to the center, followed by a separator section to separate the gas and the liquid flow, where the gas flow is subsequently directed towards the gas plenum.

In addition, the downcomer tube creates a flow gradient, by which small bubbles move towards the downcomer tube wall, and then exit radially, at slow flow speeds, allowing also these bubbles to move towards the gas volume (this is in fact the opposite effect of the tangential swirler described above, by which the gas is displaced to the center of the downcomer tube). This continuous process leads to the removal of gas from the liquid, and displaces and captures the gas to the gas volume in between the downcomer tube and the up-flow guide tube, allowing the top part of the system to be completely filled with liquid without gas entrainment issues and with continuous gas removal at the downcomer outlet. This effect has been described in literature, for upward bubbly flows. In an embodiment of the system of the disclosure, the liquid flow is downward, i.e. opposite to the direction of bubble buoyancy, which will create an even stronger radial movement of bubbles towards lower liquid velocity near the downcomer wall.

This effect can be further exploited by designing the exit such that the higher gas content liquid flowing close to the downcomer tube walls is selectively separated and guided towards the liquid volume surface with reduced flow speeds. For instance, by distributing the flow in the radial direction as much as possible, facilitating the gas to exit the liquid and enter the gas volume at the liquid-gas interface, rising to the gas plenum. Hereby, the gas separation at the downcomer outlet will be enhanced.

A number of options are shown in Figures 3A to 3L. The figures show design variations of the downcomer tube outlet. Any combination of options can provide the optimal degassing strategy, based on flow conditions, design geometry and overall reactor design.

Figures 3A to 3S show a number of different options to enhance gas separation, with arrows showing liquid flow and schematically depicting the path of gas bubbles in the flow. The options include:

- (A) Add a flat solid plate below the downcomer flow exit to disperse the fluid stream in the radial direction and slow down the flow, allowing more gas to escape. (Figures 3C to 3F).
- (B) Option (A) plus separating the low velocity outer radius flow in the downcomer and guide to the gas-liquid interface (Fig. 3D).
- (C) Option (A) plus a perforated end of the downcomer tube, forcing specifically the low velocity outer radius flow in the downcomer, to allow radial and upward flow (Figs. 3E, 3F).
- (D) Option (A) plus linear expansion of downcomer tube, to radially distribute the flow and achieve an overall lower velocity within the downcomer, enabling more bubbles to rise to the downcomer (Fig. 3J).
- (E) Option (A), but including a curved plate (concave) instead of flat plate (Figs. 3A, 3B).
- (F) Option (A), but having a perforated plate instead of a fully solid plate (Fig. 3G).
- (G) Option (A) plus a super-linear expansion of downcomer tube, to radially distribute the flow and achieve an overall lower velocity within the downcomer, enabling more bubbles to rise to the downcomer (Fig. 3I).
- (H) Option (A), but including a heat exchanger below the downcomer tube instead of a flat plate (Fig. 5).
- (I) Option (A), but having a curved plate (convex) instead of a flat plate (Fig. 3B).
- (J) Option (C), but with an additional orifice or tapering at the end of the downcomer tube to enable more bypass flow and possibly enhance the gas-liquid separation efficiency (Figs. 3K, 3L).
- (K) Option (J), but with additional openings along at least part of the length of the downcomer pipe to enable bypass flow along a larger flow path and possibly enhance the gas-liquid separation efficiency (Figs. 3E, 3F).

A large number of variations of different downcomer tube exits can be envisaged based on these options (or a combination hereof), depending on the geometry of the system and the bulk liquid flow speed according to design specifications.

Different options can be envisioned for the cross-section of the downcomer pipe. The at least one second conduit 16 may be, for instance, circular in cross section (such as a cylindrical pipe), but also square, rectangular, annular or any other configuration. The type of pipe (circular, square, rectangular, annular etc.) is not expected to have a significant impact on the efficiency of the gas-liquid separation process. Efficiency of gas-liquid separation is more a matter of optimizing the overall flow behavior within the reactor.

Since the gas is constrained during operation in the gas capture section 44, one or more gas openings 50 may be provided. Said openings may include one or more of valves, openings or tubes that connect the gas plenum 44 with the upper end volume of the enclosure. The gas openings 50 create a flow bypass through the separation wall 6. The openings 50 may be provided to allow the gas captured in the gas plenum to flow back up into the reactor core, allowing the liquid to flow down due to gravity. Herein, when the circulation stops, the liquid will replace the gas and occupy the void space left by the escaping gas. With an effective connection, gas flowing up, and liquid moving down, will occur passively when the pump and the liquid circulation stops. Herein, the pressure between gas plenum volume and upper liquid volume equalizes.

Multiple variations to the above are conceivable. For example, degassing tubes 52 may be used to connect the gas plenum 44 with the top part 7 of the enclosure. The one or more tubes 52 allow gas to be pushed to the gas volume in the capture section 44 directly from the top of the enclosure when the pump is active. The one or more tubes 52 allow gas to move upwards to the top of the system, when the pump and circulation stops and pressure between liquid in the top end of the system and the volume of the gas capture section 44 equalizes.

The tubes 52 may create a liquid flow bypassing the restrictor and downcomer tube during operation, and may therefore introduce some gas entrainment. Nevertheless, the amount of gas entrained may be relatively small if the fraction of bypass flow is small and may therefore be acceptable depending on the reactor operator and the nuclear regulator requirements. Degassing tubes have been tested in an experimental setup. Herein, the amount of gas entrainment in the degassing tubes 52 was minimal (see Figure 1D).

An alternative option is the use of passive valves between the gas volume in the gas capture section 44 and the liquid volume in the upper end 7 of the enclosure. Such valves may be closed by liquid flow or pressure (pushed to close) during stead state operation. The valves may open once the pump and therefore the circulation stops, allowing gas to move upwards.

Small holes or slits can also be arranged in between the gas volume of the gas capture section 44 and the liquid volume in the top end 7. Such holes can be arranged, for example, in the separation wall 6, to create a flow bypass which allows gas to flow upwards when the pump and therefore the flow is stopped and pressure is reduced. Similar to the degassing tubes, this would also create a small leak path, creating a liquid bypass flow through the gas plenum which may introduce some gas entrainment.

When starting the pump, the liquid flow initially pushes the gas from the top downwards, where it collects in the section in between the downcomer tube and lower part of the upflow guide tube. If properly designed, with the liquid flow properly guided avoiding local recirculation or stagnant flow, the rest of the gas is taken with the liquid in the form of bubbles, that are partially released to the same gas volume, and partially taken with the flow thought the pump and back up. If not well designed, a pocket of gas, or local gas bubble recirculation may remain in the top of the system, creating a gas-liquid surface, which might disappear over time due to gas entrainment in the liquid flow, but might also be maintained by volatile elements and compounds from the flow escaping into these gas pockets. It is therefore important to prevent local flow recirculation, local flow separation, or stagnant flow regions within the top section of the reactor core where gas may accumulate resulting in gas pockets that are difficult to remove. This can be achieved for example by adding well-designed flow guides at the top of the reactor core to ensure all the gas is displaced and/or taken by the primary salt flow in the start-up phase.

Another option is to introduce (de-)gassing tubes that connect the upper part of the liquid volume, at or near the locations where gas pockets might remain or form, with the gas volume below, ensuring gas is removed from the top part when the pump is operated. The gas in these pockets is transported to the gas volume by the pressure in the top section creates by the pump and the restrictor combination. When the gas is gone, these connections also create a liquid flow bypassing the restrictor via the gas volume to the lower fluid volume. It is important that no gas entrainment takes place via this route, which can be established by ensuring low flow speeds and allowing the liquid to flow down along the walls of the gas volume.

Degassing tubes 52 are also proposed in this disclosure as an option to enable passive draining of the reactor core. Therefore, these functionalities can be combined.

The system and method of the present disclosure are applicable to, for instance, a single core design of a nuclear reactor, using liquid fuel.

Generally referring to Figures 4A to 4D, various , that adopts the invention, as an example. This could be a typical MSFR concept, where a full liquid core, with pumps and heat exchanger on the side, is degassed by pumps, and has the possibility to degas with a downcomer, or multiple downcomers, and partial draining of the core.

In accordance with the system of the present disclosure, the pump and pump impellers may be at the cold side of the heat exchangers.

Generally referring to Figure 5, the system and method of the present disclosure have a beneficial application potential in cartridge core concepts, in which the nuclear core comprises multiple individually contained and replaceable modules in which the salt can circulate. For details of such as system and the method of operation thereof, reference is made to, for instance, WO-2020/225156-A1.

When the pumps operate and cartridge top sections are filled with liquid fuel with low gas fraction, the reactor can be made critical. When the pumps are not operational, the top sections are filled with gas, and the reactor is in a non-critical configuration. In this way passive draining is achieved in a controlled manner, the reactor can only be critical by pump action, and by adopting the invention, the liquid fuel flow is de-gassed online, and a gas volume below core will return the reactor to non-criticality, when the pump stops.

For the modular design (Fig. 5), a heat exchanger may be included in the cartridge or module 202. The downcomer outlet configuration may be selected from the options shown in Figures 3A to 3S. The heat exchanger(s) can allow gas bubbles to escape, provided the flow velocity in the heat exchanger is below a threshold, and proper escape paths are provided to allow the gas to move upwards toward the gas plenum.

Generally referring to Figures 4A to 4D, schematically, flow guides in the top and bottom sections are shown, intended to avoid gas or stagnant liquid or recirculating liquid pockets in the system.

The pump and pump impeller may be located at the heat exchanger exit, to limit exposure of the impeller to high temperature liquid fuel. It is possible for circulation to move the other way around, in which case it is advisable to place the pump impeller on top of the heat exchanger, for the same effect (see, for instance, Figures 4A to 4D).

The present invention can also be applied to general liquid fuel nuclear reactor concepts, such as the European Molten Salt Reactor, the TMSR [China], the MCFR [Terrapower] or others. Herein, the gas-liquid separation system of the present disclosure may replace the currently foreseen helium bubbling system. By allowing passive draining through gas-liquid displacement upon shutdown of the pump, the system and method of the present disclosure also obviate the use of a freeze-valve. This can significantly reduce the complexity of the nuclear reactor by eliminating two additional, external systems and increasing the safety and reliability by minimizing the primary containment bypasses (since additional helium gas insertion and gas extraction tubes through the primary containment are no longer necessary) and increasing the reliability of the passive draining safety system (since it no longer relies on the unpredictable melting time of the freeze plug).

Figures 4A to 4D show examples of what such a configuration could look like. The reactor core is located between the two (optional) degassing tubes 52. When the pumps are not operational, the core is filled with gas and the reactor is in a subcritical configuration. When the pumps are switched on, the gas is displaced to the gas plenum 44 (located in the void between the downcomer conduit and the upward flow) by the liquid nuclear fuel. The reactor core is filled with liquid and the reactor becomes critical when the void fraction drops below a threshold. When the pumps are switched off, the gas flows back up into the core and the reactor becomes subcritical again. Thus, the system of the disclosure may be broadly applied to different liquid fuel nuclear reactor concepts.

The system and method of the disclosure present an opportunity. By designing an appropriate gas-liquid separation system which collects the gas below the reactor core during active operation and enables the gas to flow upwards into the reactor core during reactor shutdown, the reactor can be passively drained simply relying on the act of gravity, and therefore not requiring the presence of any additional and potentially error prone equipment, such as a freeze-valve and also obviating the error prone functionality and the melting thereof. The scope of the present disclosure is not limited to the embodiments described above. Many modifications therein are conceivable without deviating from the scope of the present invention as defined by the appended claims. In particular, combinations of features of respective embodiments or aspects of the disclosure can be made. An aspect of the invention may be further advantageously enhanced by adding a feature that was described in relation to another aspect of the invention. While the present invention has been illustrated and described in detail with reference to the figures, such illustration and description are illustrative or exemplary only.

In the claims, the word "comprising" does not exclude other steps or elements, and "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

**Claims**

1. A system for gas-liquid separation, the system comprising:

    an enclosure for holding a fluid;
    a separation wall arranged in the enclosure, separating an upper end of the enclosure from a lower end;
    at least one first conduit for upward flow of the fluid towards a corresponding first opening of the separation wall;
    at least one second conduit for flow of the liquid downward from a corresponding second opening of the separation wall;
    a system for circulating the fluid downward via the at least one second conduit and upward via the at least one first conduit, and
    a gas capture section between the at least one first conduit, the at least one second conduit, and below the separation wall.

2. The system of claim 1, comprising a flow deceleration section arranged at or near a lower end of the at least one second conduit.

3. The system of claim 2, wherein the flow deceleration section comprises one or more of: a widening section of a lower end of the at least one conduit, a tapering section of the at least one second conduit, a trumpet shaped section of the at least one second conduit, a plate for partially blocking fluid flow, a curved surface, a radial flow guide, and side openings in a lower end of a wall of the at least one second conduit.

4. The system of one of the previous claims, wherein the at least one second conduit has a length exceeding a threshold to enable the at least one second conduit to extend into the fluid during cycling of the liquid.

5. The system of one of the previous claims, comprising a tubular wall extending downward from the separation wall, wherein the at least one first conduit is comprised of an annular space between the tubular wall and the enclosure.

6. The system according to claim 5, wherein the tube has a lower end provided with a narrowing section having an opening, the system for cycling the liquid comprising a rotor which is arranged in the opening.

7. The system according to one of the previous claims, wherein the separation wall is provided with at least one third opening.

8. The system of claim 7, wherein the at least one third opening has a third cross sectional area which is smaller than a first cross sectional area of the at least one first opening and/or a second cross sectional area of the at least one second opening.

9. The system of claim 7 or 8, wherein the at least one third opening has a third cross sectional area which is on the order of 0.5 to 10% of a second cross sectional area of the at least one second opening.

10. The system according to one of claims 7 to 9, wherein the at least one third opening is provided with a tube extending upward from the separation wall.

11. The system of claim 10, wherein the tube extends substantially to an upper end of the enclosure.

12. The system of one of claims 7 to 11, wherein the at least one third opening is provided with a valve.

13. The system of one of the previous claims, wherein a first cross sectional area of the at least one first conduit exceeds a second cross sectional area of the at least one second conduit.

14. The system of claim 13, wherein the at least one second conduit is provided with a flow restriction.

15. A nuclear reactor, comprising at least one system according to one of claims 1 to 14.

16. The nuclear reactor of claim 15, comprising a number of individually replaceable modules, each module comprising a system according to one of claims 1 to 14.

17. The nuclear reactor of claim 15, comprising a single enclosure, wherein the separation wall in the enclosure is provided with one or more first conduits, and with one or more second conduits.

18. The nuclear reactor of claim 17, comprising multiple systems for circulating the fluid downward via the at least one second conduit and upward via the at least one first conduit.

19. The nuclear reactor of one of claims 15 to 18, wherein the fluid is a liquid nuclear fuel, for instance comprising molten salt or water with uranium nitrate.

20. The nuclear reactor of one of claims 15 to 19,

    wherein the system is adapted to remove gas from the fluid and into the gas capture section upon activation of the circulation system, and
    wherein one or more third openings in the separation wall provide a passive safety system when the circulation system stops, allowing gas to re-enter a top section of the enclosure, thereby making the nuclear reactor non-critical.

21. A method for gas liquid separation, the method comprising the steps of:

    providing an enclosure for holding a fluid;
    arranging a separation wall in the enclosure, separating an upper end of the enclosure from a lower end;
    providing at least one first conduit for upward flow of the fluid towards a corresponding first opening of the separation wall;
    providing at least one second conduit for flow of the liquid downward from a corresponding second opening of the separation wall; and
    circulating the fluid downward via the at least one second conduit and upward via the at least one first conduit, thereby capturing gas included in the fluid in a gas capture section between the at least one first conduit, the at least one second conduit, and below the separation wall.

22. The method of claim 21, comprising the step of decelerating downward flow of the fluid at or near a lower end of the at least one second conduit.

23. The method of claim 22, wherein the step of decelerating downward flow of the fluid comprises one or more of:

    guiding the flow through a tapering section of the at least one second conduit or through a trumpet shaped section of the at least one second conduit,
    at least partially blocking the flow using one or more of a plate, a curved surface, or a radial flow guide, or
    allowing gas to escape from the fluid using side openings in a lower end of a wall of the at least one second conduit.

24. The method of one of claims 21 to 23, wherein the step of circulating the liquid comprises:
allowing gas entrained in the fluid to rise up to the separation wall, thereby collecting the gas.

25. The method of claim 24, wherein the at least one second conduit has a length exceeding a threshold for a volume of collected gas.

26. The method of claim 24 or 25, comprising the step of allowing the gas as collected below the separation wall to escape via at least one third opening in the separation wall.

27. The method of claim 26, wherein the at least one third opening has a third cross sectional area which is smaller than a first cross sectional area of the at least one first opening and/or a second cross sectional area of the at least one second opening.

28. The method of claim 26 or 27, wherein the at least one third opening is provided with a tube extending upward from the separation wall.

29. The method of one of claims 21 to 28, comprising the step of restricting fluid flow in the at least one second conduit, to allow the step of circulating the fluid to increase a pressure of the fluid above the at least one second conduit.

30. The method of claim 29, wherein the step of restricting fluid flow comprises providing a first cross sectional area of the at least one first conduit which exceeds a second cross sectional area of the at least one second conduit.

31. The method of claim 30, the step of restricting fluid flow in the at least one second conduit comprising providing a flow restrictor in the at least one second conduit.

Fig. 1A   Fig. 1B   Fig. 1C

EP 4 751 791 A1

Fig. 1D

Fig. 1E

Fig. 1F

EP 4 751 791 A1

# Fig. 2

# Fig. 3A

# Fig. 3B

Fig. 3C    Fig. 3D    Fig. 3E    Fig. 3F

EP 4 751 791 A1

Fig. 3G  Fig. 3H  Fig. 3I  Fig. 3J

EP 4 751 791 A1

# Fig. 3K    Fig. 3L    Fig. 3M    Fig. 3N

EP 4 751 791 A1

Fig. 3O  Fig. 3P  Fig. 3Q  Fig. 3R

EP 4 751 791 A1

## Fig. 3S

## Fig. 3T

# Fig. 4A

# Fig. 4B

# Fig. 4C

# Fig. 4D

# Fig. 5

# EUROPEAN SEARCH REPORT

**Application Number**

EP 24 21 6513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 964 153 B2 (CHEVRON USA INC [US]) 21 June 2011 (2011-06-21) * figure 1 * | 1-31 | INV. B01D19/00 G21C3/54 |
| X | US 4 221 653 A (CHERVENAK MICHAEL C ET AL) 9 September 1980 (1980-09-09) * figure 1 * | 1-31 | |
| X | US 4 072 563 A (MCDONALD BERTRAND N ET AL) 7 February 1978 (1978-02-07) * figure 1 * | 1-31 | |
| X | JP 2003 130982 A (HITACHI LTD) 8 May 2003 (2003-05-08) * figure 7 * | 1-31 | |
| X | US 3 202 584 A (MAARTEN BOGAARDT ET AL) 24 August 1965 (1965-08-24) * figure 1 * | 1-31 | |
| X | US 2014/023172 A1 (LEBLANC DAVID [CA]) 23 January 2014 (2014-01-23) * figure 8 * | 1-31 | TECHNICAL FIELDS SEARCHED (IPC) B01D G21C |
| X | US 11 728 052 B2 (TERRAPOWER LLC [US]; TERRA POWER LLC [US]) 15 August 2023 (2023-08-15) * figures 1A-1D * | 1-31 | |

The present search report has been drawn up for all claims

| Place of search | Date of completion of the search | Examiner |
|---|---|---|
| The Hague | 22 July 2025 | Weber, Christian |

## ANNEX TO THE EUROPEAN SEARCH REPORT
## ON EUROPEAN PATENT APPLICATION NO.

EP 24 21 6513

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | | Publication date | Patent family member(s) | | Publication date |
|---|---|---|---|---|---|
| US 7964153 | B2 | 21-06-2011 | NONE | | |
| US 4221653 | A | 09-09-1980 | CA | 1119535 A | 09-03-1982 |
| | | | CA | 1122554 A | 27-04-1982 |
| | | | DE | 2916695 A1 | 17-01-1980 |
| | | | MX | 152632 A | 02-10-1985 |
| | | | US | 4221653 A | 09-09-1980 |
| US 4072563 | A | 07-02-1978 | AU | 2388377 A | 20-07-1978 |
| | | | BE | 852830 A | 18-07-1977 |
| | | | BR | 7702039 A | 25-07-1978 |
| | | | CA | 1071334 A | 05-02-1980 |
| | | | DE | 2711364 A1 | 29-12-1977 |
| | | | ES | 456817 A1 | 01-04-1978 |
| | | | FR | 2356245 A1 | 20-01-1978 |
| | | | GB | 1540005 A | 07-02-1979 |
| | | | IL | 51511 A | 31-07-1980 |
| | | | IT | 1125724 B | 14-05-1986 |
| | | | JP | S53392 A | 05-01-1978 |
| | | | JP | S5644394 B2 | 19-10-1981 |
| | | | NO | 147354 B | 13-12-1982 |
| | | | PT | 66280 A | 01-04-1977 |
| | | | US | 4072563 A | 07-02-1978 |
| JP 2003130982 | A | 08-05-2003 | JP | 4078057 B2 | 23-04-2008 |
| | | | JP | 2003130982 A | 08-05-2003 |
| US 3202584 | A | 24-08-1965 | BE | 612640 A | 02-05-1962 |
| | | | DE | 1213067 B | 24-03-1966 |
| | | | GB | 946885 A | 15-01-1964 |
| | | | NL | 126735 C | 22-07-2025 |
| | | | NL | 260537 A | 22-07-2025 |
| | | | SE | 219228 C1 | 27-02-1968 |
| | | | US | 3202584 A | 24-08-1965 |
| US 2014023172 | A1 | 23-01-2014 | CA | 2869561 A1 | 11-10-2012 |
| | | | US | 2014023172 A1 | 23-01-2014 |
| | | | WO | 2012135957 A1 | 11-10-2012 |
| US 11728052 | B2 | 15-08-2023 | US | 2022051818 A1 | 17-02-2022 |
| | | | WO | 2022039893 A1 | 24-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020225156 A1

### Non-patent literature cited in the description

- **B. J. KAAKS**. Melting and Solidification Phenomena in a Molten Salt Fast Reactor. Delft University of Technology, 2024
- **M. RICHARDSON**. *Development of Freeze Valve for Use in the MSRE*, 1962
- **PARK et al.** A Simple Parameterization for the Rising Velocity of Bubbles in a Liquid Pool. *Nuclear Engineering and Technology*, June 2017, vol. 49 (4), 692-699
- **LEHR et al.** Bubble-size distributions and flow fields in bubble columns. *AIChE Journal*, November 2002, vol. 48 (11), 2426-2443